# EUROPÄISCHE PATENTSCHRIFT

(11) **EP 0 834 341 B1**
(45) Veröffentlichungstag und Bekanntmachung des Hinweises auf die Patenterteilung: **04.06.2003**
(21) Anmeldenummer: 97114239.3
(22) Anmeldetag: 18.08.1997
(51) Int. Cl.: B01D 17/02, C02F 1/40, E02B 15/04, E02B 15/00, B63B 35/32

(54) **Vorrichtung zur Aufnahme einer Leichtflüssigkeitsschicht**
Device for collecting a layer of light liquid
Dispositif pour recueillir une couche de liquide léger

(30) Priorität: 01.10.1996 DE 19640615; 02.05.1997 DE 19718590
(43) Veröffentlichungstag der Anmeldung: 08.04.1998
(73) Patentinhaber: Ihne, Alexander, 57234 Wilnsdorf (DE)
(72) Erfinder: Ihne, Alexander, 57234 Wilnsdorf (DE)
(74) Vertreter: Selting, Günther, Dipl.-Ing.

(56) Entgegenhaltungen:
- DE-B- 2 753 933
- GB-A- 1 408 699
- US-A- 3 789 988
- US-A- 4 139 470
- US-A- 4 483 774

## Beschreibung

Die Erfindung bezieht sich auf eine schwimmende Vorrichtung zur Aufnahme einer Leichtflüssigkeitsschicht, die auf einer Schwerflüssigkeit schwimmt.

Derartige schwimmende Vorrichtungen werden hauptsächlich dazu eingesetzt, eine auf Wasser schwimmende Öl-schicht aufzunehmen und anschließend möglichst vollständig vom Wasser zu trennen, um das derart gereinigte Wasser wieder in den Wasserkreislauf einleiten zu können. Problematisch hierbei ist, daß eine gute Trennung des Öls vom Wasser verhältnismäßig aufwendig ist. Bei bekannten Vorrichtungen wird die Ölschicht zusammen mit einem erheblichen Wasseranteil abgesaugt oder abgetrennt und zur endgültigen Trennung des Öles von dem Wasser über Rohre oder Tankschiffe an Land gebracht, wo in aufwendigen stationären Anlagen die Trennung des Wasser-Ölgemisches vorgenommen wird. Eine derartige stationäre Anlage ist in US-A-4,483,774 beschrieben. Als eine effektive schwimmende Vorrichtung zur Aufnahme einer Leichtflüssigkeits- bzw. Olschicht ist der sogenannte Skimmer bekannt, der ein kreisförmiges Einlaufbecken aufweist, in dem die zirkulierende Leichtflüssigkeitsschicht durch eine Abflußöffnung abfließen kann. Derartige Skimner sind bekannt aus US-A-3,789,988 und US-A-4,139,470. Durch den Transport des Öl-Wassergemisches zu der landgestützten Trennanlage wird das Öl-Wassergemisch zu einer Emulsion vermischt, die einen besonderen Aufwand zur Trennung des Öles von dem Wasser erfordert.

Aufgabe der Erfindung ist es, eine verbesserte Vorrichtung zur Aufnahme und Trennung einer auf einer Schwerflüssigkeit schwimmenden Leichtflüssigkeitsschicht zu schaffen.

Diese Aufgabe wird erfindungsgemäß mit den Merkmalen des Patentanspruchs 1 gelöst.

Die erfindungsgemäße Vorrichtung besteht aus einem Schwimmkörper, der einen Skimmer mit einem annähernd tangential angeordneten Flüssigkeitseinlauf aufweist. Im Einlaufbecken ist eine Leichtflüssigkeits-Abflußöffnung angeordnet, durch die die Leichtflüssigkeit bzw. das Leichtflüssigkeits-Schwerflüssigkeitsgemisch abfließen kann. Das Leichtflüssigkeits-Schwerflüssigkeitsgemisch fließt in einen als Abdrückbehälter ausgebildeten Trennbehälter ab, der im Bodenbereich einen Schwerflüssigkeits-Abfluß aufweist, der außerhalb des Schwimmkörpers mündet und durch den die abgetrennte Schwerflüssigkeit wieder in die Umgebung abgeleitet wird. Im oberen Bereich des Trennbehälters ist ein Leichtflüssigkeits-Überlauf angeordnet, der in einen Leichtflüssigkeitstank mündet.

Damit ist in einem Schwimmkörper ein Skimmer zusammen mit einer einfachen Trennvorrichtung realisiert, so daß auf dem Schwimmkörper bereits die endgültige Trennung der Leichtflüssigkeit von der Schwerflüssigkeit vorgenommen werden kann. Die Leichtflüssigkeit wird in einem Leichtflüssigkeitstank auf der schwimmenden Vorrichtung gespeichert. Ein Transportieren des im Skinner gewonnenen Leichtflüssigkeits-Schwerflüssigkeitsgemisches an Land und die dortige aufwendige Trennung der Leichtflüssigkeit von der Schwerflüssigkeit entfallen. Die aus dem Trennbehälter ablaufende abgetrennte Schwerflüssigkeit kann direkt ohne weitere Reinigung wieder in die den Schwimmkörper umgebende Schwerflüssigkeit abgeleitet werden. Es muß nur noch die Leichtflüssigkeit aus dem Tank an Land transportiert und entsorgt werden. Eine weitere Verarbeitung und Trennung an Land ist nicht mehr erforderlich. Wegen der einfachen Gesamtkonstruktion sind auch schwimmende Vorrichtungen mit sehr niedrigem Tiefgang für den Einsatz in sehr flachen Gewässern realisierbar.

Die Abflußöffnung ist im Mittelbereich des Einlaufbeckens angeordnet. Dadurch ergibt sich ein exaktes Abfließen der Leichtflüssigkeitsschicht, so dass ein hoher Anteil an Leichtflüssigkeit an dem insgesamt abfliessenden Flüssigkeitsgemisch erreicht wird.

Der Skimmer hat zusammen mit dem Trennbehälter so gute Trennungseigenschaften, daß bei der Trennung eines Öl-Wassergemisches das Wasser nach geltenden Umweltbestimmungen ohne weitere Reinigung direkt wieder in das Gewässer abgeleitet werden kann.

Vorzugsweise sperrt eine Regelvorrichtung den Schwerflüssigkeits-Abfluß, wenn der Schwerflüssigkeits-Pegel unter einen vorbestimmten unteren Grenzwert sinkt, und sperrt den Leichtflüssigkeits-Abfluß, wenn der Schwerflüssigkeits-Pegel über einen vorbestimmten oberen Grenzwert steigt. Dadurch wird mit einfachen Mitteln eine Regelvorrichtung in dem Trennbehälter realisiert, die ein Auslaufen von Leichtflüssigkeit durch den Schwerflüssigkeits-Abfluß und von Schwerflüssigkeit durch den Leichtflüssigkeits-Überlauf ausschließt.

In einer bevorzugten Ausgestaltung weist der Schwerflüssigkeits-Abfluß des Trennbehälters eine Absaugvorrichtung zum Absaugen der Schwerflüssigkeit auf. Während die Leichtflüssigkeit durch das in den Trennbehälter fließende Leicht-Schwerflüssigkeitsgemisch ständig in den Leichtflüssigkeitstank gedrückt wird, wird der Schwerflüssigkeitsanteil durch das Absaugen möglichst gering gehalten. Die Absaugung bewirkt über den Trennbehälter einen zusätzlichen Sog in der Einlaufbecken-Abflußöffnung, durch den die Leistung der Vorrichtung verbessert wird.

Vorzugsweise ist die Absaugvorrichtung eine mechanische Pumpe. Dies kann eine durch einen Motor angetriebene Flüssigkeitspumpe verschiedenster Ausgestaltung sein, beispielsweise eine Propeller- oder Kreiselpumpe.

Die Absaugvorrichtung kann auch von einem Abflußrohr gebildet werden, das von der Schwerflüssigkeit außerhalb des Schwimmkörpers in Ausflußrichtung umströmt wird, so daß in dem Abflußrohr ein Sog in Abflußrichtung entsteht. Dieser Sog kann dadurch verstärkt werden, daß das Abflußrohr von einem Mantelrohr umgeben ist, so daß die vorbeifließende Flüssigkeit eine verstärkte Sogwirkung in Ausflußrichtung bewirkt.

Vorzugsweise ist die erfindungsgemäße Vorrichtung als ein auf dem Wasser schwimmendes Ponton zur Aufnahme und Trennung von auf Wasser schwimmendem Öl ausgebildet.

Dies ist eine typische Anwendung für die Trennung einer Leichtflüssigkeitsschicht, die auf einer Schwerflüssigkeit schwimmt. Der Ponton kann mit weiteren Pontons aneinandergereiht werden, um die Gesamtkapazität zu erhöhen. Der Ponton kann auch seitlich an Wasserfahrzeugen angebracht sein. Die Pontons werden mit einer gewissen Grundgeschwindigkeit durch das Wasser gezogen. Dies kann beispielsweise die langsame Fahrt eines Wasserfahrzeugs sein, an dem ein oder mehrere Pontons seitlich montiert sind. Die Pontons können jedoch auch in einem fließenden Gewässer am Grund verankert sein.

Die Regelvorrichtung kann einen Schwimmer aufweisen, der an der Schwerflüssigkeits-Oberfläche schwimmt. Der Schwimmer kann als Schwimmkörper ausgebildet sein, der bei Erreichen des unteren Grenzwertes eine Schwerflüssigkeits-Abflußöffnung verschließt und bei Erreichen des oberen Grenzwertes eine Öffnung des Leichtflüssigkeits-Überlaufes verschließt. Dadurch wird mit einfachsten Mitteln zuverlässig verhindert, daß einerseits Leichtflüssigkeit unbeabsichtigt durch den Schwerflüssigkeits-Abfluß in die umgebende Schwerflüssigkeit abgeleitet wird, und andererseits verhindert, daß Schwerflüssigkeit unbeabsichtigt in den Leichtflüssigkeits-Tank geraten kann.

Vorzugsweise wird die Höhe der Einlaufbecken-Abflußöffnung zum Schwerflüssigkeits-Pegel der einfließenden Schwerflüssigkeit einstellbar ausgebildet. Dadurch ist stets gewährleistet, daß nur eine geringe Schwerflüssigkeitsmenge in den Trennbehälter abfließt, unabhängig davon, wie hoch die Leichtflüssigkeitsschicht auf der Schwerflüssigkeit ist.

Zur Regelung der Höhe der Einlaufbecken-Abflußöffnung kann ein Höhenregler vorgesehen sein, der die Höhe der Einlaufbecken-Abflußöffnung kontinuierlich in Abhängigkeit von dem Pegel der einfließenden Schwerflüssigkeit nachregelt. Dadurch wird eine schnelle und effektive Regelung der Öffnungshöhe erreicht, so daß auch bei starkem Wellengang oder variierendem Schwerflüssigkeits-Pegel stets die richtige Höhe der Einlaufbecken-Abflußöffnung eingestellt ist.

In einer bevorzugten Ausgestaltung ist die Einlaufbecken-Abflußöffnung trichterförmig ausgebildet. Die trichterförmige Ausbildung begünstigt das ruhige zirkuläre Ablaufen der Flüssigkeit.

Der Trichterwinkel ist vorzugsweise größer als 45° und weist insbesondere bei 75° gute Ablaufeigenschaften auf. Der Durchmesser der Trichteröffnung kann dabei zwischen der Hälfte und einem Viertel des Durchmessers des Einlaufbeckens betragen. Bei diesen Verhältnissen wird eine hohe Abflußleistung bei gleichzeitig niedrigem Schwerflüssigkeitsanteil realisiert.

Vorzugsweise weist das Einlaufbecken eine Bodenwand auf, durch die der Staudruck der in das Einlaufbecken einfließenden Flüssigkeiten in dem Einlaufbecken erhöht wird. Gleichzeitig trägt die Bodenwand zur Beruhigung der einfließenden Flüssigkeiten bei. In der Bodenwand können Öffnungen für den Abfluß der Schwerflüssigkeit vorgesehen sein, um den Druck in dem Einlaufbecken nicht zu hoch werden zu lassen und um einen höheren Durchsatz zu ermöglichen.

Im folgenden wird unter Bezugnahme auf die Zeichnungen ein Ausführungsbeispiel der Erfindung näher erläutert.

Es zeigen:
- Fig. 1: zwei zusammengesetzte erfindungsgemäße schwimmende Vorrichtungen in einem Horizontalschnitt,
- Fig. 2: einen vertikalen Längsschnitt entlang der Schnittlinie II-II der Fig. 1,
- Fig. 3: einen Längsschnitt eines Trennbehälters der Vorrichtung der Fig. 2, wobei der Schwimmer den Schwerflüssigkeits-Abfluß verschließt,
- Fig. 4: einen Längsschnitt des Trennbehälters der Fig. 2, wobei der Schwimmer den Leichtflüssigkeits-Überlauf verschließt,
- Fig. 5: ein als Siphon ausgebildetes Abflußrohr des Schwerflüssigkeits-Abflusses,
- Fig. 6: ein Schleppboot mit je einer Aufnahmevorrichtung an jeder Seite, und
- Fig. 7: zwei Schleppboote, die zwei zusammengesetzte Aufnahmevorrichtungen, wie in Fig. 1 gezeigt, schleppen.

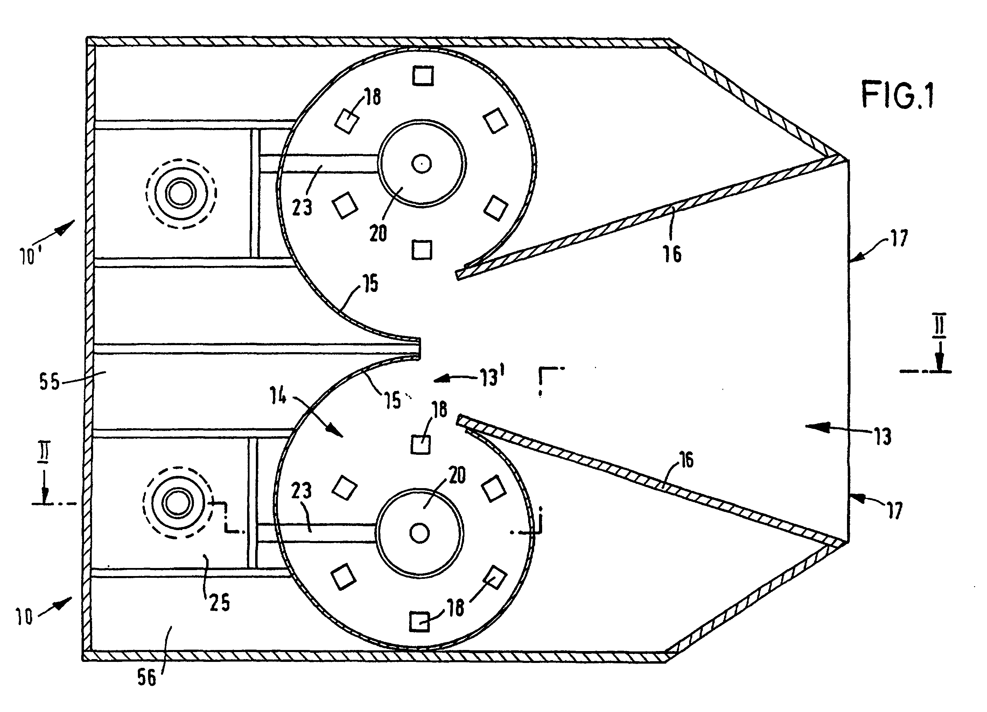

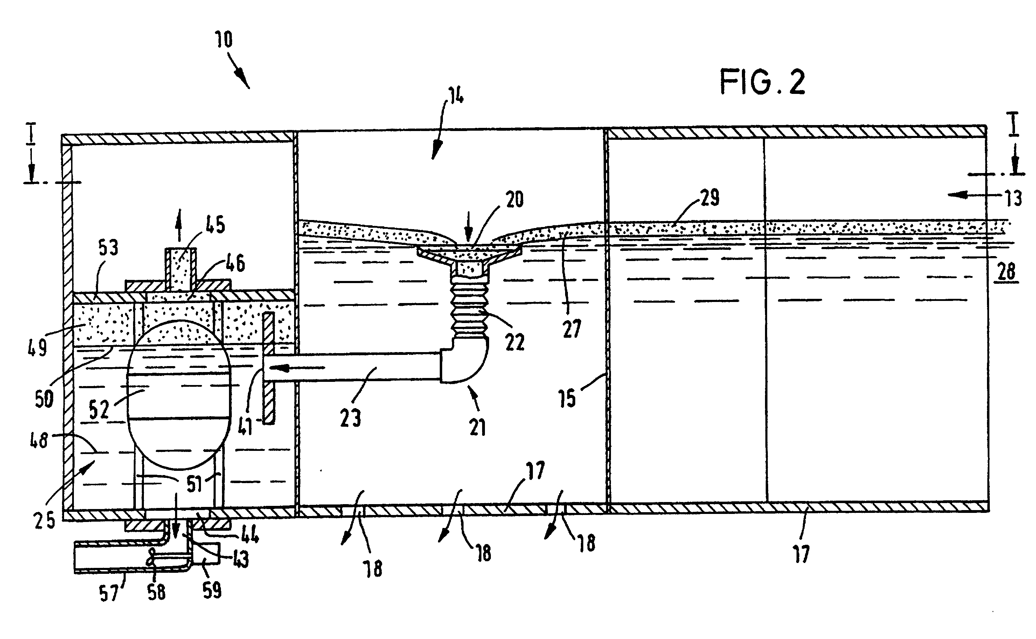

In den Figuren 1 und 2 sind als Schwimmpontons 10,10' ausgebildete Schwimmkörper dargestellt, die für den Einsatz in der Schwerflüssigkeit Wasser 28 zur Aufnahme der Leichtflüssigkeit Öl 29 ausgebildet sind. Beide in Fig. 1 gezeigte Schwimmpontons 10,10' sind identisch, jedoch spiegelbildlich zueinander ausgebildet. Jeder Schwimmponton 10,10' weist einen Einlaufbereich 13 auf, der zu einem Flüssigkeitseinlauf 13' wird, der tangential in einem kreisartigen umlaufenden Einlaufbecken 14 mündet. Das Einlaufbecken 14 weist eine spiralartig angeordnete Beckenwand 15 auf, die sich bis zu ungefähr zwei Dritteln des Anfangsradius verengt.

Der gesamte Einlaufbereich 13 und das Einlaufbecken 14 weisen eine Bodenwand 17 auf, die im Bereich des Einlaufbeckens 14 mehrere Öffnungen 18 aufweist, durch die das einströmende Wasser 28 abfließen kann. Die Bodenwand 17 kann im Bereich des Einlaufbeckens 14 auch entfallen, so daß das Wasser 28 frei nach unten abfließen kann. Die Beckenwand 15 ist bis zur Bodenwand 17 heruntergezogen, ihre Unterkante kann jedoch auch zwischen der Bodenwand 17 des Schwimmkörpers im Einlaufbereich und dem Niveau des einströmenden Wassers 28 angeordnet sein.

In der Mitte des teilweise kreisförmigen Einlaufbeckens 14 ist als Abflußöffnung ein Abflußtrichter 20 angeordnet, an den sich nach unten ein Abflußrohr 21 anschließt, das aus einem senkrechten flexiblen Rohrabschnitt 22 und einen sich daran rechtwinklig anschließenden waagerechten Rohrabschnnitt 23 zusammensetzt. Das Abflußrohr 21 mündet in einem als Abdrückbehälter 25 ausgebildeten Trennbehälter, in dem das durch den Abflußtrichter 20 und das Abflußrohr 21 einfließende Öl-Wassergemisch schließlich getrennt wird.

Der Abflußtrichter 20 hat einen Trichterwinkel von ungefähr 75°, so daß der Abflußtrichter 20 relativ flach ausgebildet ist (Fig. 2). Der Trichterdurchmesser beträgt ungefähr ein Drittel des kleinsten Durchmessers des Einlaufbeckens 14.

Der Abflußtrichter 20 ist höhenverstellbar ausgebildet, so daß seine Höhe relativ zur Wasseroberfläche 27 des einströmenden Wassers 28 eingestellt werden kann. Dafür ist ein nicht gezeigter Schwimmer vorgesehen, der spezifisch leichter als Wasser, jedoch schwerer als Öl ist. Durch den Schwimmer kann die Trichterhöhe gegenüber der Wasseroberfläche 27 eingestellt werden, so daß die Trichterhöhe je nach Wellenschlag, Durchmischung der Grenzschicht Öl-Wasser oder den Durchsatzmengen der einfließenden Flüssigkeiten, so eingestellt werden kann, daß die gesamte Ölschicht durch den Trichter 20 abläuft, jedoch ein geringstmöglicher Wasseranteil dabei mit abfließt. Bei richtiger Einstellung der Abflußtrichterhöhe beträgt der Ölanteil ungefähr 80 % und der Wasseranteil ungefähr 20 %.

Wie in Fig. 2 dargestellt, fließt das Wasser-Ölgemisch durch das Abflußrohr 21 zu der Rohröffnung 41 des horizontalen Rohrabschnittes 23, aus der es in den Abdrückbehälter 25 fließt. In dem Abdrückbehälter 25 trennt sich das Öl-Wassergemisch wieder, so daß sich unterhalb einer Grenzschicht 50 das Wasser 48 und oberhalb der Grenzschicht 50 das Öl 49 sammelt.

Im Boden des Abdrückbehälters 25 ist eine Schwerflüssigkeits-Öffnung 44 angeordnet, an die sich der Schwerflüssigkeits-Abfluß 43 anschließt. Der Schwerflüssigkeits-Abfluß 43 mündet in einem Abflußrohr 57, das horizontal in dem den Schwimmponton 10 umgebenden Wasser derart angeordnet ist, daß das Abflußrohr 57 von dem Wasser in Ausflußrichtung umströmt wird, und dadurch in dem Abflußrohr 57 ein Sog in Abflußrichtung entsteht. Um auch unter ungünstigen Bedingungen stets einen ausreichenden Abfluß des Wassers 48 aus dem Abdrückbehälter 25 zu gewährleisten, ist in dem Abflußrohr 57 ein Propeller 58 angeordnet, der von einem Propellerantrieb 59 außerhalb des Abflußrohres 57 angetrieben wird. Der Antrieb 59 des Propellers 58 wird derart geregelt, daß der Abfluß des Wassers 28 unterstützt wird und dadurch in dem Abdrückbehälter 25 kein zu hoher Wasserstand auftreten kann.

Der Abdrückbehälter 25 ist an seiner Oberseite durch eine Deckenwand 53 begrenzt, die eine Leichtflüssigkeits-Überlauföffnung 46 aufweist, an die sich ein Leichtflüssigkeits-Überlauf 45 anschließt. Durch den stutzenartigen Leichtflüssigkeits-Überlauf 45 fließt das Öl in als Leichtflüssigkeits-Tanks ausgebildete Öltanks 55,56 seitlich des Abdrückbehälters 25. Die Bodenwand des in Verlängerung des Flüssigkeitseinlaufs 13' angeordneten Öltanks 55 ist oberhalb der Oberfläche des einströmenden Wassers 28 angeordnet, so daß das Wasser 28 zwischen den beiden Schwimmpontons 10,10' abfließen kann.

Der Leichtflüssigkeits-Überlauf 45 und der Schwerflüssigkeits-Abfluß 43 liegen auf einer Achse vertikal genau übereinander. Auf derselben Achse angeordnet und entlang dieser Achse vertikal beweglich ist als Regelvorrichtung ein Schwimmkörper 52 angeordnet, der durch vertikale Führungsstangen 51 in einer vertikalen Zwangsführung geführt ist. Der Schwimmkörper 52 ist spezifisch leichter als Wasser und spezifisch schwerer als Öl, so daß er stets an der Grenzschicht 50 schwimmt und somit seine vertikale Stellung abhängig vom Wasserstand innerhalb des Abdrückbehälters 25 ist.

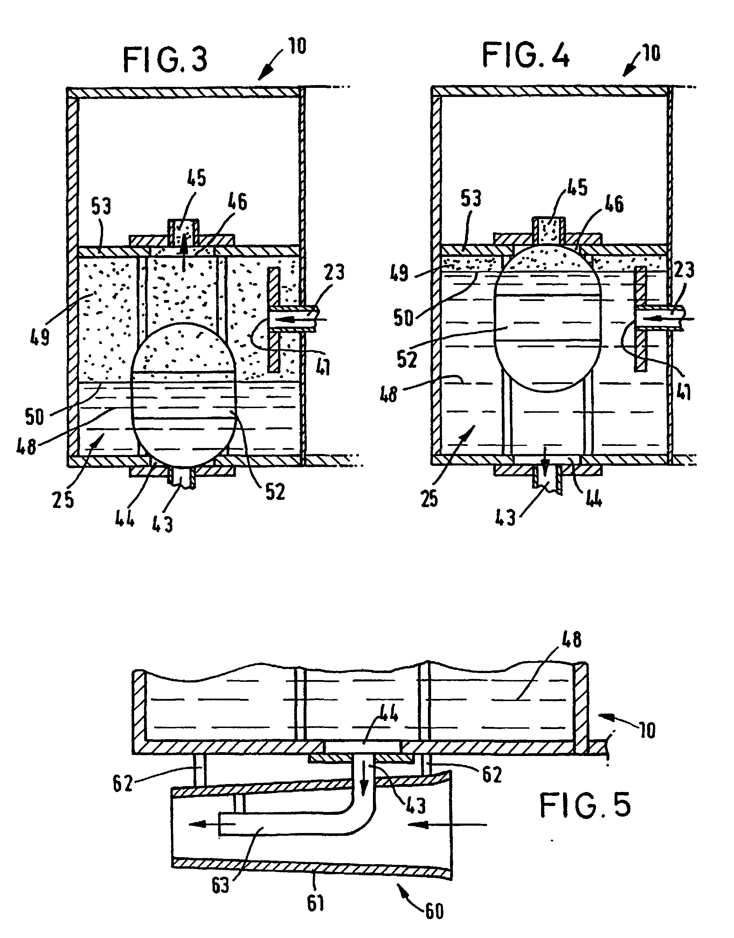

Wie in Figur 3 dargestellt, verschließt der rundlichlängliche Schwimmkörper 52 mit seinem einen Ende die Schwerflüssigkeits-Abflußöffnung 44, sobald die Öl-Wasser-Grenzschicht 50 einen bestimmten Grenzwert unterschreitet. Dadurch wird verhindert, daß Öl 49 durch den Schwerflüssigkeits-Abfluß 43 in das den Schwimmponton 10 umgebende Wasser abgeleitet wird.

In Figur 4 ist die Öl-Wasser-Grenzschicht 50 so hoch gestiegen, daß der ebenfalls aufgestiegene Schwimmkörper 52 die Leichtflüssigkeits-Überlauföffnung 46 verschließt. Dadurch wird verhindert, daß das Wasser 48 durch den Leichtflüssigkeits-Überlauf 45 in die Öltanks 55,56 geraten kann. Ferner wird dadurch der von dem durch das Rohr 23 einströmende Öl-Wassergemisch erzeugte Druck auf das Wasser 48 erhöht, das dadurch verstärkt durch den Schwerflüssigkeits-Abfluß 43 aus dem Abdrückbehälter 25 herausgedrückt wird. Ist genügend Wasser 48 abgeführt worden, so senkt sich die Grenzschicht 50 und damit der Schwimmkörper 52, so daß wieder Öl durch den Leichtflüssigkeits-Überlauf 45 abfließen kann.

In Figur 5 ist eine andere Ausgestaltung des Schwerflüssigkeits-Abflusses 43 dargestellt. Der Schwerflüssigkeits-Abfluß 43 mündet in einem waagerechten Abflußrohr 63, das siphonartig von einem leicht konischen Mantelkörper 61 umgeben ist und dadurch einen siphonartigen Abfluß bildet. Der Mantelkörper 61 ist an der Einströmseite weiter als an der Ausströmseite und überragt längenmäßig beide Enden des Abflußrohres 63. Der Mantelkörper 61 wird mit Streben 62 an dem Schwimmponton 10 gehalten.

Das einströmende Wasser 28 und Öl 29 werden durch die Einlaufwände 16 in das Einlaufbecken 14 gezwungen, wo das Wasser 28 und das Öl 29 in eine kreisförmige Bewegung versetzt werden. Durch die lange Beruhigungsstrecke und die auftretenden Zentrifugalkräfte beruhigt sich das ggf. unruhige Wasser und die Grenzschicht zwischen Wasser und Öl wird schärfer. Schließlich läuft die Ölschicht in den Abflußtrichter 20, ohne daß dabei große Wasseranteile mit abfließen. Das Öl-Wassergemisch fließt durch das Abflußrohr 21 in den Abdrückbehälter 25, in dem das Öl 49 von dem Wasser 48 getrennt wird. Durch die Öffnungen 18 in der Bodenwand 17 der Einlaufbecken 14 fließt ständig das zufließende Wasser 28 ab, so daß auch die Ölschicht 29 ständig von außen in das Einlaufbecken nachfließen kann. Das Öl-Wassergemisch wird wie oben bereits beschrieben in dem Abdrückbehälter 25 getrennt, wobei das Öl 49 durch den Leichtflüssigkeits-Überlauf 45 in die Öltanks 55,56 abfließt, während das Wasser 48 aus dem Abdrückbehälter 25 durch den Schwerflüssigkeits-Abfluß 43 zurück in das den Schwimmponton umgebende Wasser eingeleitet wird.

Durch die Kombination eines Skimmers mit einem Abdrückbehälter ist eine Vorrichtung geschaffen, die mit geringem Pump- und damit Energieaufwand eine Reinigung ölbedeckten Wassers vornehmen kann. Eine Trennung des Öl-Wassergemisches in einer landgestützten Trennanlage entfällt. Das aus den Schwimmpontons 10,10' ausfließende gereinigte Wasser ist so gut von dem Öl gereinigt, daß das abfließende Wasser gegenwärtigen Umweltschutzbestimmungen genügt und direkt wieder in den Wasserkreislauf eingeleitet werden darf.

Beim Einsatz der Schwimmpontons 10 zum Absaugen einer Ölschicht 29 auf dem Wasser 28, bewegen sich die beiden Schwimmpontons 10 langsam durch das Wasser, sei es dadurch, daß sie am Grund festgemacht sind und von den Flüssigkeiten 28,29 angeströmt werden, oder sei es, daß sie durch Schleppboote durch das Wasser 28 gezogen werden.

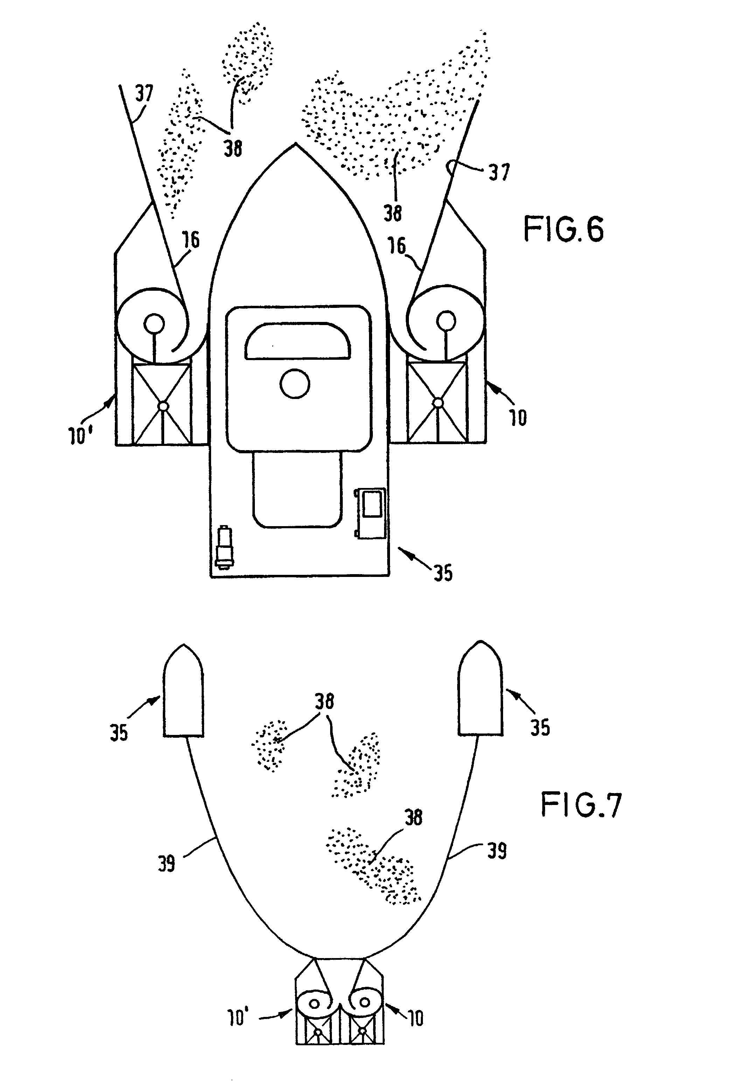

In Figur 6 ist ein Schleppboot 35 dargestellt, an dem an beiden Seiten jeweils ein Schwimmponton 10,10' befestigt ist. Die Einlaufwände 16 der Schwimmpontons 10,10' sind durch starre Ölsperren 37 verlängert, so daß die Arbeitsbreite vergrößert ist. Das Schleppboot 35 kann gezielt auf vereinzelte kleinere Ölfelder 38 auf dem Wasser zufahren und sie entfernen.

In Figur 7 ist eine andere Konstellation zum Reinigen größerer Wasserflächen dargestellt. Zwei Schwimmpontons 10,10' sind, wie bereits in Figur 1 gezeigt wurde, zu einer Einheit zusammengestellt und werden über flexible Ölsperren 39 von zwei Schleppbooten 35 gezogen. Die Schleppboote 35 bilden zusammen mit den Ölsperren 39 und den Schwimmpontons 10 eine Ölfalle, mit der großflächig Ölfelder 38 eingefangen und entfernt werden können.

## Patentansprüche

1. Schwimmende Vorrichtung zur Aufnahme einer Leichtflüssigkeit (29), die auf einer Schwerflüssigkeit (28) schwimmt,
mit einem Schwimmkörper (10,10'), der einen Vorratstank (55,56) und ein in Draufsicht kreisförmiges Einlaufbecken (14) aufweist, in das ein annähernd tangential angeordneter und direkt von der Schwimmkörper-Außenseite kommender Flüssigkeitseinlauf (13') mündet,
wobei im oberen Mittelbereich des Einlaufbeckens (14) eine Leichtflüssigkeits-Abflussöffnung (20) angeordnet ist, durch die die Leichtflüssigkeit (29) abfließen kann, und das Einlaufbecken (14) im unteren Bereich einen Schwerflüssigkeitsablauf (18) aufweist,
**dadurch gekennzeichnet,**
**dass** die Leichtflüssigkeits-Abflussöffnung (20) derart angeordnet ist, dass die auf der Schwerflüssigkeit schwimmende Leichtflüssigkeit in die Abflussöffnung (20) überlaufen und nach unten abfließen kann,
**dass** in dem Schwimmkörper (10,10') ein Trennbehälter (25) vorgesehen ist, in den die Leichtflüssigkeit von der Leichtflüssigkeits-Abflussöffnung (20) abfließen kann,
**dass** der Trennbehälter (25) als Abdrückbehälter ausgebildet ist, der an seiner Oberseite durch eine Deckenwand (53) begrenzt ist, die einen Leichtflüssigkeits-Überlauf (45) aufweist, der zu dem Vorratstank (55,56) führt, und
**dass** der Trennbehälter (25) im Bodenbereich einen Schwerflüssigkeits-Abfluss (43) aufweist der zur Aussenseite des Schwimmkörpers führt.

2. Vorrichtung nach Anspruch 1, **dadurch gekennzeichnet, dass** eine Regelvorrichtung vorgesehen ist, die den Schwerflüssigkeits-Abfluss (43) sperrt, wenn der Schwerflüssigkeits-Pegel (50) unter einen vorbestimmten unteren Grenzwert sinkt, und den Leichtflüssigkeits-Überlauf (45) sperrt, wenn der Schwerflüssigkeits-Pegel (50) über einen vorbestimmten oberen Grenzwert steigt.

3. Vorrichtung nach Anspruch 1 oder 2, **dadurch gekennzeichnet, dass** der Schwerflüssigkeits-Abfluss (43) eine Absaugvorrichtung (58;60) zum Absaugen der Schwerflüssigkeit (48) aufweist.

4. Vorrichtung nach Anspruch 3, **dadurch gekennzeichnet, dass** die Absaugvorrichtung eine mechanische Pumpe (58,59) ist.

5. Vorrichtung nach Anspruch 3 oder 4, **dadurch gekennzeichnet, dass** die Absaugvorrichtung von einem Abflussrohr (57;63) gebildet wird, das von Schwerflüssigkeit außerhalb des Schwimmkörpers (10) in Ausflussrichtung umströmt wird, so dass in dem Abflussrohr (57;63) ein Sog in Abflussrichtung entsteht.

6. Vorrichtung nach Anspruch 5, **dadurch gekennzeichnet, dass** das Abflussrohr (63) siphonartig von einem Mantelrohr (61) umgeben ist.

7. Vorrichtung nach einem der Ansprüche 1-6, **dadurch gekennzeichnet, dass** die Leichtflüssigkeits-Abflussöffnung an einem Trichter (20) vorgesehen ist.

8. Vorrichtung nach Anspruch 7, **dadurch gekennzeichnet, dass** der Trichterwinkel größer als 45° ist, und vorzugsweise ungefähr 75° beträgt.

9. Vorrichtung nach Anspruch 7 oder 8, **dadurch gekennzeichnet, dass** der Durchmesser der Trichteröffnung (20) zwischen der Hälfte und einem Viertel des Durchmessers des Einlaufbeckens (14) beträgt.

10. Vorrichtung nach einem der Ansprüche 1 - 9, **dadurch gekennzeichnet, dass** das Einlaufbecken (14) eine horizontale Bodenwand (17) aufweist, die als Schwerflüssigkeitsablauf Öffnungen (18) in der Bodenwand (17) aufweist.

## Claims

1. A floating device for taking up a light liquid (29) swimming on a heavy liquid (28),
comprising a floating body (10,10') having a reservoir (55, 56) and an in-flow basin (14) that is circular in plan view and into which opens an approximately tangentially arranged liquid inlet (13') coming directly from the exterior of the floating body,
a light liquid discharge opening (20) being arranged in the upper central portion of the in-flow basin (14), through which opening the light liquid (29) can flow out, and the in-flow basin (14) having a heavy liquid drain (18) in the lower pottion,
**characterized in that**
the light liquid discharge opening (20) is arranged such that the light liquid swimming on the heavy liquid can flow into the discharge opening (20) and be drained downward,
a separating container (25) is provided in the floating body (10, 10'), into which the light liquid can drain from the light liquid discharg opening (20),
said separating container (25) being arranged as a drive-out container defined at the top by a ceiling wall (53) having a light liquid overflow (45) leading to the reservoir (55, 56), and
the separating container (25) has its bottom region provided with a heavy liquid drain (43) leading to the exterior of the floating body.

2. The device of claim 1, wherein a regulating device is provided that closes the heavy liquid drain (20) when the heavy liquid level (50) falls below a predetermined lower threshold, and closes the light liquid overflow when the heavy liquid level (50) rises above a predetermined upper threshold.

3. The device ofclaim 1 or 2, wherein the heavy liquid drain (43) comprises a suction device for drawing off the heavy liquid (48).

4. The device of claim 3, wherein the suction device is a mechanical pump (58, 59).

5. The device of claim 3 or 4, wherein the suction device is formed by a drain pipe (57; 63) flown around by heavy liquid in the discharge direction outside the floating body (10) so that a suction effect is caused in the drain pipe (57; 63) acting in the discharge direction.

6. The device of claim 5, wherein the drain pipe (63) is enclosed by a jacket pipe (61) in the manner of a siphon.

7. The device of one of claims 1-6, wherein the light liquid discharge opening is provided at a funnel (20).

8. The device of claim 7, wherein the funnel angle is greater than 45° and preferably is about 75°.

9. The device of claim 7 or 8, wherein the diameter of the funnel opening (20) is between one half and one fourth of the diameter of the in-flow basin (14).

10. The device of one of claims 1-9, wherein the in-flow basin (14) has a horizontal bottom wall (17) that has openings (18) in the bottom wall (17) for the heavy liquid drain.

## Revendications

1. Dispositif flottant pour recueillir un liquide léger (29) flottant sur un liquide lourd (28),
comprenant un corps flottant, (10, 10'), qui présente un réservoir (55, 56) et un bassin d'admission (14) circulaire selon la vue de dessus, dans lequel débouche une admission de liquide (13') disposée de manière sensiblement tangentielle et venant directement de la surface extérieure du corps flottant,
un orifice d'écoulement (20) pour liquide léger étant disposé dans la zone centrale supérieure du bassin d'admission (14) à travers lequel le liquide léger (29) peut s'écouler, et le bassin d'admission (14) présentant une évacuation pour liquide lourd (18) dans la zone inférieure,
**caractérisé**
**en ce que** l'orifice d'écoulement pour liquide léger (20) est disposé de telle sorte que le liquide léger flottant sur le liquide lourd peut déborder dans l'orifice d'écoulement (20) et s'écouler vers le bas,
**en ce que** dans le corps flottant (10, 10'), est prévu un récipient de séparation (25), dans lequel le liquide léger peut s'écouler depuis l'orifice d'écoulement (20) pour liquide léger,
**en ce que** le récipient de séparation (25) présente la forme d'un récipient de refoulement dont la face supérieure est délimitée par une paroi de couverture (53) qui présente un trop-plein (45) pour liquide léger conduisant vers le réservoir (55, 56), et
**en ce que** le bac de séparation (25) présente au niveau du fond un écoulement (43) pour liquide lourd conduisant vers la surface extérieure du corps flottant.

2. Dispositif selon la revendication 1, **caractérisé en ce qu'**un dispositif de régulation, est prévu, qui bloque l'écoulement (43) pour liquide lourd lorsque le niveau (50) du liquide lourd tombe en dessous d'une valeur limite inférieure prédéterminée, et qui bloque le trop-plein (45) pour liquide léger lorsque le niveau (50) du liquide lourd dépasse une valeur limite supérieure prédéterminée.

3. Dispositif selon la revendication 1 ou 2, **caractérisé en ce que** l'écoulement (43) pour liquide lourd présente un dispositif d'aspiration (58 ; 60) pour aspirer le liquide lourd (48).

4. Dispositif selon la revendication 3, **caractérisé en ce que** le dispositif d'aspiration est une pompe mécanique (58, 59).

5. Dispositif selon la revendication 3 ou 4, **caractérisé en ce que** le dispositif d'aspiration est constitué par un tube d'écoulement (57 ; 63) autour duquel circule du liquide lourd à l'extérieur du corps flottant (10) dans le sens d'écoulement, de telle sorte qu'une succion est générée dans le tube d'écoulement (57 ; 63) dans le sens d'écoulement.

6. Dispositif selon la revendication 5, **caractérisé en ce que** le tube d'écoulement (63) est entouré tel un siphon d'un tube d'enveloppe (61).

7. Dispositif selon l'une des revendications 1 à 6, **caractérisé en ce que** l'orifice d'écoulement pour liquide léger est prévu sur un entonnoir (20).

8. Dispositif selon la revendication 7, **caractérisé en ce que** l'angle de l'entonnoir est supérieur à 45° et est de préférence de 75° environ.

9. Dispositif selon la revendication 7 ou 8, **caractérisé en ce que** le diamètre de l'ouverture de l'entonnoir (20) se situe entre la moitié et un quart du diamètre du bassin d'admission (14).

10. Dispositif selon l'une des revendications 1 à 9, **caractérisé en ce que** le bassin d'admission (14) comprend une paroi de fond (17) horizontale, qui présente des ouvertures (18) dans la paroi de fond (17) servant d'évacuation pour liquide lourd.
